# EUROPEAN PATENT APPLICATION

(11) **EP 4 554 055 A1**
(43) Date of publication of application: **14.05.2025**
(21) Application number: 22950371.9
(22) Date of filing: 08.11.2022
(51) Int. Cl.: H02K 1/32, H02K 9/06, H02K 5/20, H02K 1/30, H02K 1/2796, H02K 21/24

(54) **ELECTRIC MACHINE HAVING IMPROVED COOLING STRUCTURE**

(30) Priority: 04.07.2022 KR 20220081981; 04.07.2022 KR 20220081982
(71) Applicant: Korea Electrotechnology Research Institute, Changwon-si, Gyeongsangnam-do 51543 (KR)
(72) Inventor: LEE, Ji Young, Changwon-si, Gyeongsangnam-do 51543 (KR); LEE, Ji Heon, Changwon-si, Gyeongsangnam-do 51543 (KR)
(74) Representative: Cabinet Beau de Loménie
(86) International application number: PCT/KR2022/017482
(87) International publication number: WO 2024/010146

(57) **Abstract**

An electric machine having an improved cooling structure is disclosed. The electric machine includes: a housing including a front cover, a body, and a rear cover coupled to each other to form an accommodation space; a rotating shaft rotatably mounted at an axial center of the housing; a rotor hub coupled to the rotating shaft; a rotor coupled to the rotor hub to rotate together with the rotating shaft and including a plurality of permanent magnets arranged in a circumferential direction on a disc-shaped surface; and a stator fixedly mounted inside the housing to be opposite the rotor in an axial direction of the housing and including a plurality of coils arranged in the circumferential direction, wherein the rotor includes an air hole for allowing airflow between the front and rear sides along the axial direction of the housing.

## Description

### [Technical Field]

The present invention relates to an electric machine having an improved cooling structure and, more particularly, to an electric machine having significantly improved cooling performance and power generation efficiency through a structure configured to allow cooling air to flow smoothly into a space between a rotor and a stator.

### [Background Art]

Generally, a generator is a device that converts mechanical energy into electrical energy and is used in various fields. Generators may be classified into two types based on driving methods thereof: one using a working fluid, such as a gas turbine or steam turbine; and the other using a field magnet. In the field magnet-based driving method, a rotor with permanent magnets is rotated using mechanical power of a turbine or engine to induce current in coils wound around a stator, thereby generating electricity.

In addition, there are two types of field magnet-based generators: radial flux permanent magnet (RFPM) generators and axial flux permanent magnet (AFPM) generators.

RFPM generators have a structure in which a cylindrical rotor is rotated inside (or outside) a stator to generate an induced electromotive force by electromagnetic induction between permanent magnets circumferentially installed on an outer (or inner) peripheral surface of the rotor and coils wound around an iron core formed on an inner (or outer) peripheral surface of the stator.

In RFPM generators, the permanent magnets installed on the outer peripheral surface of the rotor are radially magnetized and the magnetic flux generated by the magnetized magnets passes through the coils arranged on the inner peripheral surface of the stator.

While AFPM generators also rely on electromagnetic induction between permanent magnets installed on a rotor and coils wound around a stator to generate electricity, they have a structural difference from RFPM generators in that a disc-shaped rotor is disposed opposite a stator in an axial direction. In the AFPM generator, a plurality of permanent magnets is circumferentially arranged on the surface of the rotor and a plurality of coils is wound inside the stator.

In AFPM generators, the direction of magnetization of the permanent magnet is parallel to a rotating shaft rotating the rotor. Such an AFPM generator can be manufactured in a thin, flat form and offers the advantage of a short magnetic circuit path, enabling highly efficient operation.

Typical generators, including these two types, have a structure in which a rotor and a stator are received inside a housing. During operation, heat is generated in the rotor, the stator, and other components of the generator. Since the heat generated inside the generator can reduce power generation efficiency, it is necessary to cool the interior of the generator.

To address this, a common method involves circulating cooling air within the housing using a fan installed inside the generator. Front and rear covers of the housing forming a body of the generator are formed with through-holes to allow introduction/discharge of air therethrough.

Here, since various components, including the rotor and the stator, are densely packed within the housing, it is difficult to effectively dissipate heat if the flow of cooling air inside the housing is not properly formed.

Particularly, among the two generator types described above, AFPM generators may be less efficient in cooling compared to RFPM generators. The reasons for this will be described below.

First, in RFPM generators, a space between a cylindrical rotor and a stator disposed around an outer circumference of the rotor is formed parallel to an axial direction of a rotating shaft, thereby allowing creation of a natural, unobstructed air flow within the housing in the axial direction. That is, air introduced from one cover of the housing can be smoothly discharged to the other cover of the housing through the space between the rotor and stator.

In contrast, in AFPM generators, a rotor and a stator are disposed parallel to each other in a direction perpendicular to an axial direction of a rotating shaft. This arrangement blocks an internal passageway of the generator, making it difficult to create a smooth air flow within the housing and thus increasing the risk of air stagnation.

Further, AFPM generators face challenges in effectively cooling a space between the rotor and the stator due to difficulty in introducing cooling air into the space. Given that coils wound on the stator are the primary source of heat generation within the generator, if the stator is interposed between two rotors, cooling air introduced into the housing can only cool the outer surfaces of the rotors, failing to contribute to cooling of the stator interposed between the rotors.

Moreover, a flat disc-shaped AFPM generator has a higher component density within a housing, resulting in increased heat generation. Accordingly, failure to properly cool the interior of the generator can lead to significant reduction in power generation efficiency.

### [Disclosure]

### [Technical Problem]

Embodiments of the present invention are aimed at solving such problems in the art and it is one aspect of the present invention to provide an electric machine that is an AFPM generator having a structure in which a rotor and a stator are arranged parallel to each other in a direction perpendicular to an axial direction of a rotating shaft, and can significantly improve cooling performance and power generation efficiency by effectively dissipating not only heat generated from the rotor but also heat generated from coils of the stator through a structure designed to guide cooling air introduced into a housing to flow smoothly into a space between the rotor and the stator.

Another aspect of the present invention is to provide an electric machine that can effectively prevent detachment of a permanent magnet from the rotor.

The technical problems of the present invention are not limited to those mentioned above, and other technical problems not explicitly stated can be readily understood by those skilled in the art from the following description.

### [Technical Solution]

In accordance with one aspect of the present invention, an electric machine having an improved cooling structure, includes: a housing including a front cover, a body, and a rear cover coupled to each other to form an accommodation space inside; a rotating shaft rotatably mounted at an axial center of the housing; a rotor hub coupled to the rotating shaft; a rotor coupled to the rotor hub to rotate together with the rotating shaft and including a plurality of permanent magnets arranged in a circumferential direction on a disc-shaped surface; and a stator fixedly mounted inside the housing to be opposite the rotor in an axial direction of the housing and including a plurality of coils arranged in the circumferential direction, wherein the rotor includes an air hole for allowing airflow between the front and rear sides along the axial direction.

The rear cover and the front cover may be formed with an air inlet for introduction of cooling air into the housing and an air outlet for discharge of the cooling air from the housing.

The cooling air introduced into the housing may flow into a space between the rotor and the stator through the air hole, the cooling air flowing into the space between the rotor and the stator may be branched into a stream flowing in the axial direction of the housing and a stream flowing in a radial direction of the rotor, and a plurality of air outlets may be formed along the circumferential direction on an outer surface of the body to discharge the cooling air flowing along the radial direction of the rotor.

The rotor hub may include: a cylindrical hub body in the form of a cylinder that is penetrated in an axial direction to allow the rotating shaft to be inserted and coupled; and a rotor fastening unit protrudingly formed around an outer circumference of the hub body, where the rotor is in contact and fastened, and the rotor fastening unit may have a spline shape to avoid interference with the air hole.

The spline shape may be a shape in which the rotor fastening unit has protrusions with a sinusoidal shape repeating at equidistant intervals along the circumferential direction.

The air hole may be positioned at a valley formed by a spline curve of the rotor fastening unit.

The rotor may further include a fastening hole for coupling to the rotor fastening unit, and the air hole and the fastening hole may be alternately formed along the circumferential direction of the rotor.

The rotor may include: a disc-shaped carrier in which a through-hole is formed at a center to allow the rotating shaft to pass through and including a mounting space along the circumferential direction to mount the plurality of permanent magnets; the plurality of permanent magnets being arranged along the circumferential direction at regular intervals on a surface of the carrier facing the stator; and a fixing pin disposed between each pair of adjacent permanent magnets to fix the permanent magnets to the carrier, wherein a draft angle is applied to contact surfaces where the permanent magnet and the fixing pin are in contact, thereby forming the contact surfaces between the permanent magnet and the fixing pin as inclined surfaces, and the side surface of the permanent magnet is pressingly supported by the inclined contact surface of the fixing pin to prevent detachment.

Each pair of permanent magnets disposed opposite each other across the stator may have opposite polarities.

The fixing pin may be formed with a fastening hole penetrating in a thickness direction and may be fixed to the carrier by fastening a bolt or a screw through the fastening hole.

The mounting space may be provided in a form of a groove formed with a step difference from the surface of the carrier, corresponding to a space where the permanent magnet and the fixing pin are arranged.

The fixing pin may be disposed in the mounting space to have a predetermined clearance at both ends along a longitudinal direction.

A length of the fixing pin along a direction outward from the center of the rotor may be shorter than a length of the permanent magnet.

### [Advantageous Effects]

According to the present invention as described above, cooling air introduced into a housing can flow smoothly without structural congestion, thereby cooling the inside of the generator. Furthermore, the cooling air can also smoothly flow into the space between the rotor and the stator, effectively colling the coils wounded on the stator. As a result, with the improvement in the cooling performance of the generator, a significant increase in the efficiency of the generator can be expected.

The effects of the present invention are not limited to those mentioned above, and other effects not mentioned can be clearly understood from the detailed description below.

### [Description of Drawings]

FIG. 1 is a perspective view illustrating an external structure of an electrical machine according to the present invention.
FIG. 2 is an exploded perspective view of the electrical machine according to the present invention.
FIG. 3 is a cross-sectional view illustrating an internal structure of the electrical machine according to the present invention.
FIG. 4 is a view of a rotor according to the present invention.
FIG. 5 is a view illustrating coupling between a rotating shaft and a rotor hub according to the present invention.
FIG. 6 is a view illustrating coupling between the rotating shaft, the rotor hub, and a rotor according to the present invention.
FIG. 7 is a view illustrating a flow of cooling air inside the electric machine according to the present invention.
FIG. 8 is a view illustrating a permanent magnet detachment prevention structure according to the present invention.
FIG. 9 is a cross-sectional view of a permanent magnet fixing structure according to the present invention.

### [Best Mode]

For full understanding of the present invention, operational advantages thereof, and the purposes accomplished by practice thereof, reference is made to the accompanying drawings, which illustrate preferred embodiments of the invention, and to the description thereof.

The drawings attached to this specification are schematic representations intended to illustrate embodiments of the invention and may not accurately reflect the actual physical configuration. The sizes of the components shown in the drawings may be exaggerated or reduced for illustrative purposes and do not necessarily represent the actual sizes thereof.

The terminology used herein is for the purpose of describing particular embodiments and is not intended to be limiting. For example, it will be understood that the terms "includes", "comprises", "including" and/or "comprising," when used in this specification, specify the presence of stated features, steps, operations, elements, and/or components, but do not preclude the presence or addition of one or more other features, steps, operations, elements, components, and/or groups.

In addition, when an element or layer is referred to as being "on," "connected to," or "coupled to" another element or layer, it may be directly on, connected to, or coupled to the other element or layer or intervening elements or layers may be present. As used herein, the singular forms, "a", "an", and "the" are intended to include the plural forms as well, unless the context clearly indicates otherwise.

Hereinafter, exemplary embodiments of the present invention will be described in detail with reference to the accompanying drawings. The embodiments described below are provided for thorough understanding of the invention by those skilled in the art and should not be construed as limiting the scope of the invention.

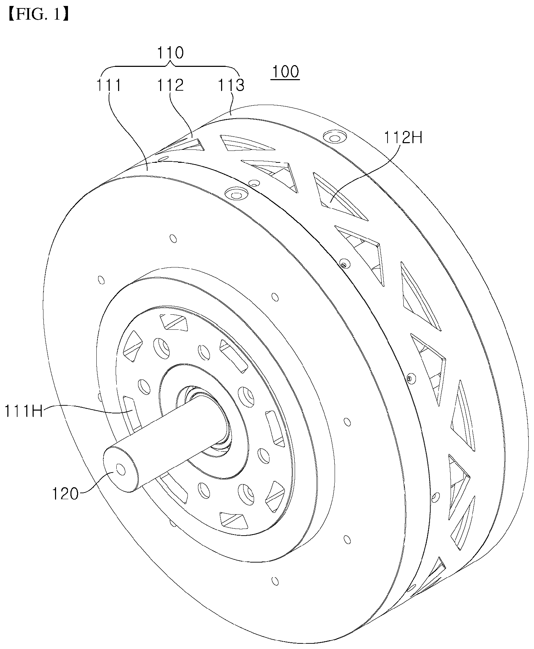

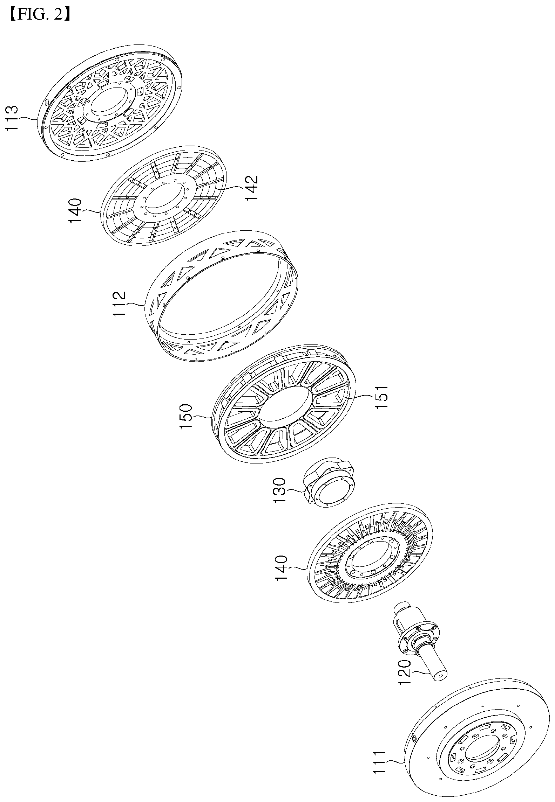

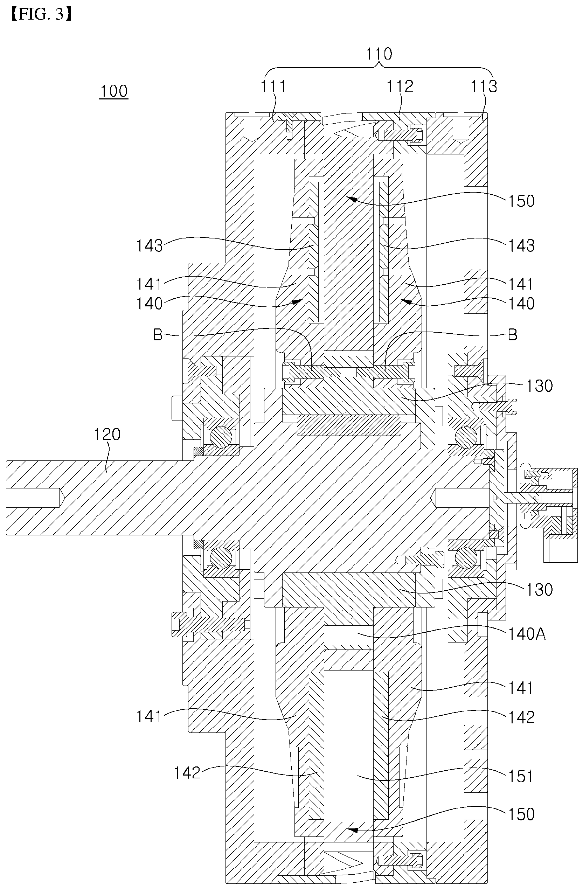

FIG. 1 is a perspective view illustrating an external structure of an electrical machine according to the present invention, FIG. 2 is an exploded perspective view of the electrical machine according to the present invention, FIG. 3 is a cross-sectional view illustrating an internal structure of the electrical machine according to the present invention. Note that FIG. 2 shows only essential components of the present invention for illustrative purposes and some components are omitted for clarity.

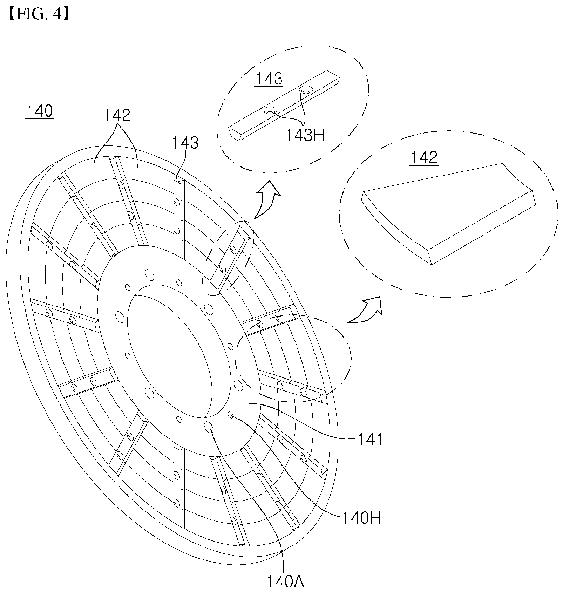

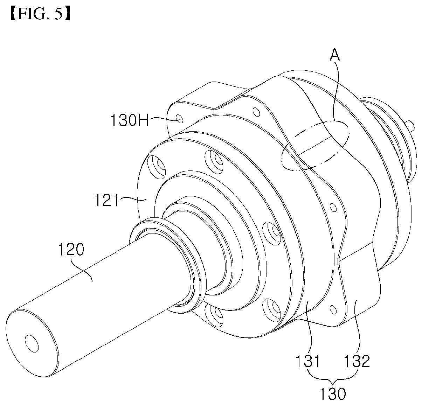

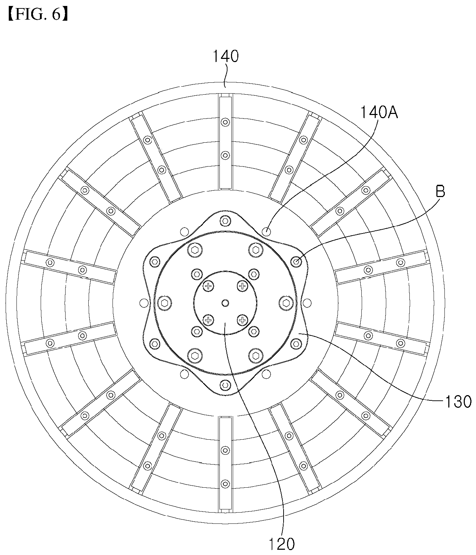

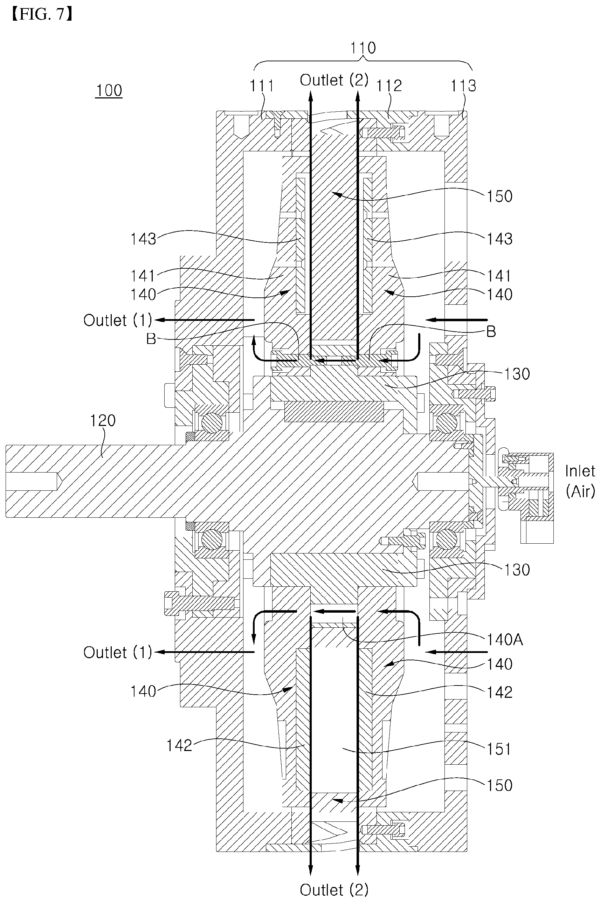

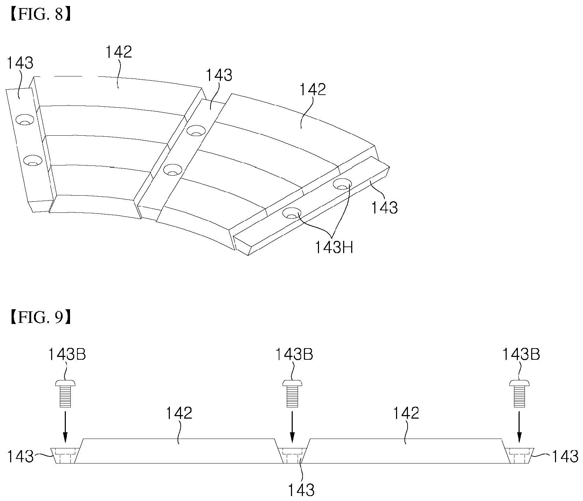

FIG. 4 is a view of a rotor according to the present invention, FIG. 5 is a view illustrating coupling between a rotating shaft and a rotor hub according to the present invention, FIG. 6 is a view illustrating coupling between the rotating shaft, the rotor hub, and a rotor according to the present invention, FIG. 7 is a view illustrating a flow of cooling air inside the electric machine according to the present invention, FIG. 8 is a view illustrating a permanent magnet detachment prevention structure according to the present invention, and FIG. 9 is a cross-sectional view of a permanent magnet fixing structure according to the present invention.

Referring to the accompanying drawings, an electric machine 100 according to the present invention includes: a housing 110 including a front cover 111, a body 112, and a rear cover 113 coupled to each other to form an accommodation space; a rotating shaft 120 rotatably mounted through an axial center of the housing 110; a rotor hub 130 coupled to the rotating shaft 120; a pair of rotors 140 coupled to the rotor hub 130 to rotate together with the rotating shaft 120 and including a plurality of permanent magnets 142; and a stator 150 interposed between the pair of rotors 140 and including a plurality of coils 151. Preferably, the electric machine 100 is an axial flux permanent magnet generator.

The housing 110 may be assembled by fastening the front cover 111, the body 112, and the rear cover 113 with bolt, and a receiving space is formed inside the housing 110 by the combination of these components to accommodate other elements. It should be noted that the terms "front" and "rear", as used herein, are based on the orientation or positional relationship shown in the drawings and are not intended to indicate a specific orientation.

The rear cover 113 may be formed with an air inlet (not denoted by reference numeral) for introduction of cooling air into the housing 110, and the front cover 111 may be formed with a plurality of first air outlets 111H for discharge of the cooling air from an interior of the housing 110.

In addition, the electric machine according to the present invention is configured to allow cooling air introduced into a space between the rotor 140 and the stator 150 to be directed in a radial direction of the rotor 140, as described further below. To ensure that the cooling air directed in the radial direction of the rotor is discharged to an exterior of the housing 110, the body 112 may include a plurality of second air outlets 112H formed along an outer surface of the body along the circumferential direction.

The rotating shaft 120 is rotatably mounted at the axial center of the housing 110. The rotor 140 described below may be coupled to a portion of the rotating shaft 120 received in the housing 110 through the rotor hub 130. The rotor hub 130 and the rotor 140 coupled to the rotating shaft 120 may rotate together with the rotating shaft 120.

In addition, the rotating shaft 120 may be formed with a flange 121 for coupling to the rotor hub 130, wherein the flange 121 may be formed with a plurality of fastening holes along a circumferential direction.

The rotating shaft 120 may pass through a through-hole formed at the center of the front cover 111 from the interior of the housing 110, with at least a portion of it protruding outward. This feature allows the rotating shaft 120 to be powered by an external power source such as a turbine or engine.

That is, the rotating shaft 120 is a component that is powered by an external power source to rotate the rotor 140. A bearing may be mounted at portions at which the rotating shaft 120 is connected to the front cover 111 and the rear cover 113 to rotatably support the rotating shaft 120.

The rotor hub 130 basically serves as an intermediate connector for coupling two rotors 140 to the rotating shaft 120.

The rotor hub 130 may include: a cylindrical hub body 131 in the form of a cylinder that is penetrated in an axial direction to allow the rotating shaft to be inserted and coupled; and a rotor fastening unit 132 protrudingly formed around an outer circumference of the hub body, where the rotor 140 is in contact and fastened.

The hub body 131 may include a plurality of fastening holes formed along the circumferential direction at a portion adjoining the flange 121 of the rotating shaft 120. The rotating shaft 120 is inserted into the inner bore of the hub body 131 until the flange 121 contacts a front end of the hub body 131. Then, coupling between the rotating shaft 120 and the hub body 131 may be established by a mechanical fastening process in which bolts or screws are inserted into the fastening holes formed in each of the flange 121 and the hub body 131.

The rotor fastening unit 132 provides a fastening point for the rotor 140 using mechanical fasteners such as bolts or screws, and a plurality of fastening holes 130H axially extending through the rotor fastening unit 132 may be formed in a circumferential direction of the rotor fastening unit to fasten two rotors 140 to front and rear surfaces of the rotor fastening unit, respectively.

In addition, in the electric machine according to the present invention, the rotor 140 may be formed with an air hole 140A to allow air flow through the rotor. Here, it is essential to ensure that the rotor hub 130 coupled to a region of the rotor 140 in the vicinity of the air hole 140A does not interfere with air flow through the air hole 140A. A location of the air hole 140A on the rotor 140 will be described in more detail below.

To this end, the rotor fastening unit 132 according to the present invention is designed in a spline shape to avoid blocking of the air hole 140A of the rotor 140 by the rotor hub 130.

Herein, the spline shape refers a shape in which the rotor fastening unit 132 has protrusions having with a generally sinusoidal shape repeating at equidistant intervals along the circumferential direction. The air hole 140A of the rotor 140 described below is positioned at a valley formed by a spline curve of the rotor fastening unit 132 to allow air flow through the rotor 140.

Since the rotor 140 is coupled to the rotating shaft 120 through the rotor hub 130, the rotor 140 can rotate together with the rotating shaft 120. The rotor 140 includes a pair of rotors, wherein the pair of rotors is coupled to the front and rear surfaces of the rotor fastening unit 132, respectively.

The rotor 140 may include: a carrier 141 in which a through-hole is formed at a center to receive the hub body 131 and provided in the form of a disc having a predetermined size to provide a mounting space for the plurality of permanent magnets 142; the plurality of permanent magnets 142 being arranged along the circumferential direction at regular intervals on one surface of the carrier 141; and a fixing pin 143 disposed between each pair of adjacent permanent magnets 142 to fix the permanent magnets 142 to the carrier 141.

The carrier 141 may be provided as a disc-shaped member having a through hole formed at a center, and the hub body 131 of the rotor hub 130 may be inserted into and coupled to the through-hole of the carrier 141. To this end, the through-hole formed at the center of the carrier 141 may have an inner diameter identical to an outer diameter of the hub body 131.

The carrier 141 may include a plurality of fastening holes 140H formed along the circumferential direction around the through hole at locations corresponding to the fastening holes 130H formed on the rotor fastening unit 132. Thus, coupling between the rotor hub 130 and the rotor 140 may be established by inserting fasteners B, such as bolts or screws, into the fastening holes 130H of the rotor fastening unit 132 and the fastening holes 140H of the carrier 141, with the fastening holes 130H aligned with the fastening holes 140H.

Additionally, the carrier 141 may include air holes 140A formed between the fastening holes 140H spaced at regular intervals to allow air flow therethrough. The air holes 140A are also formed along circumferential direction at regular intervals on the carrier 141.

Although the fastening hole 140H and the air hole 140A formed on the carrier 141 appear to be similar in appearance in FIG. 4, it should be understood that functions of the fastening hole 140H and the air hole 140A are different from each other as the fastening hole 140H is provided to establish coupling between the rotor hub 130 and the rotor 140 by means of bolts or screws in cooperation with the fastening hole 130H of the rotor fastening unit 132 aligned therewith, whereas the air hole 140A is provided to allow air flow through the rotor 140.

Consequently, the fastening hole 140H and the air hole 140A may be alternately formed on the carrier 141 in a circumferential direction. Here, to ensure that the rotor fastening unit 132 coupled to the carrier 141 by fastening through the fastening hole 140H does not block the air hole 140A, the rotor fastening unit 132 may be designed in a spline shape, as described above.

The carrier 141 may be formed with a mounting space in the circumferential direction to mount the permanent magnet 142 and the fixing pin 143. Here, the mounting space may be provided in a form of a groove formed with a step difference from a surface of the carrier 141, corresponding to a space where the permanent magnet 142 and the fixing pin 143 are arranged.

A plurality of permanent magnets 142 having N and S poles may be mounted in the mounting space formed on the carrier 141 with alternating polarity in the circumferential direction of the carrier. Specifically, the permanent magnets 142 may be arranged at regular intervals to form an annular pattern with alternating N and S poles and the fixing pin 143 may be disposed between each pair of adjacent permanent magnets 142 to fix the permanent magnets 142 in place.

The electric machine according to the present invention has a structure in which two rotors 140 are disposed opposite each other across the stator 150 disposed on an outer circumference of the rotor hub 120. In terms of power generation efficiency, it is desirable that a pair of permanent magnets 142 disposed opposite each other across the stator 150 have opposite polarities.

Accordingly, attractive force is generated between the pair of opposing permanent magnets 142 due to opposite polarities thereof. If the attractive force is sustained, the corresponding permanent magnets 142 can be detached from the carrier 141. Therefore, it is required that the permanent magnet 142 be firmly and stably fixed to the carrier 141.

The present invention proposes a structure in which a draft angle is applied to contact surfaces where the permanent magnet 142 and the fixing pin 143 are in contact to form the contact surfaces between the permanent magnet 142 and the fixing pin 143 as inclined surfaces, and the side surface of the permanent magnet 142 is pressingly supported by the inclined contact surface of the fixing pin 143 to prevent detachment. In this structure, both the permanent magnet 142 and the fixing pin 143 may have a trapezoidal cross-section.

The fixing pin 143 may be formed with a fastening hole 143H penetrating in a thickness direction. The fastening hole 143H is provided to mechanically fasten the fixing pin 143 to the carrier 141. In addition, although not shown in the drawings, the carrier 141 may also be provided with a fastening hole for insertion of a bolt or a screw at a location corresponding to the fastening hole 143H of the fixing pin 143.

The permanent magnet 142 may be fixed in place by securing the fixing pin 143 to the carrier 141 by fastening a bolt or a screw through the fastening hole 143H such that an inclined side surface of the fixing pin 143 presses an inclined side surface of a permanent magnet 142 adjacent thereto.

In addition, in the mounting space formed on the carrier 141, the fixing pin 143 may be positioned to have a predetermined clearance at both ends along a longitudinal direction. That is, in the mounting space provided in the form of a recessed groove, both longitudinal ends of the fixing pin do not contact an inner wall defined by the recessed groove. This feature serves to prevent formation of a magnetic path through the fixing pin 143. If a magnetic path is formed through the fixing pin 143, eddy current loss can occur. Accordingly, a length of the fixing pin 143 along a direction outward from the center of the rotor may be slightly shorter than a length of the permanent magnet 142.

The stator 150 may include a through-hole formed at a center thereof and allowing the rotating shaft 120 and the rotor hub 130 coupled thereto to be placed therein and may have a structure in which the plurality of coils 151 is arranged in a circumferential direction thereof.

The stator 150 may include a plurality of slots formed in a radial direction thereof to receive the coils 151, which are electrical conductors. The plurality of slots may each have a similar shape to the permanent magnet 142 and may be partitioned from each other at regular intervals. Each of the coils 151 may be inserted into a corresponding one of the plurality of partitioned slots.

The stator 150 may be disposed such that an axial position thereof corresponds to that of the rotor fastening unit 132 of the rotor hub 130. Accordingly, the stator 150 is disposed between the pair of rotors 140 that is coupled to the front and rear surfaces of the rotor fastening unit 132, respectively.

The stator 150 may be fixed in place inside the housing 110 with an outer surface thereof coupled to the housing 110. When the rotor 140 rotates in proximity to the stator 150, an induced electromotive force is generated in the coils 151 of the stator 150.

The electric machine 100 according to the present invention may further include a rectifier or the like, which is electrically connected to the coils 151 wound around the stator 150 to convert AC generated in the coils 151 into DC. Since this feature is a typical technique well known in the art, detailed description thereof will be omitted.

In addition, the electric machine 100 according to the present invention may be cooled by natural or forced convection. For forced convection cooling, the electric machine 100 may further include a cooling fan to generate a stream of air flowing inside the housing 110. The cooling fan may be coupled to the rotating shaft 120, or may be driven independently of the rotating shaft 120.

The flow of cooling air introduced into the electric machine 100 according to the present invention will be described with reference to FIG. 7. First, cooling air is introduced into the housing 110 through the air inlet (not denoted by reference numeral) formed in the rear cover 113 by operation of the cooling fan (not shown). The introduced air may cool each component of the generator 100 while flowing through the interior of the housing 110 and then may be discharged to the exterior of the housing 110 through the first air outlet 111H formed in the front cover 111 and the second air outlet 112H formed in the body 112.

More specifically, the cooling air introduced into the housing 110 may flow into a space between the rotor 140 and the stator 150 through the air hole 140A formed in a rotor 140 adjacent to the rear cover 113. Some portion of the cooling air flowing into the space between the rotor 140 and the stator 150 may flow through the air hole 140A formed in the other rotor 140 before being discharged to the exterior of the housing 110 through the first air outlet 111H of the front cover 111, and the other portion of the cooling air flowing into the space between the rotor 140 and the stator 150 may flow in the radial direction of the rotor 140 along the surface of the rotor 140 before being discharged to the exterior of the housing 110 through the second air outlet 112H of the body 112. In this process, the cooling air flowing in the radial direction of the rotor 140 can effectively cool the coils 151 wound around the stator 150 before being discharged.

For reference, although FIG. 7 shows the air hole 140A on the lower side thereof and the fastener B coupling the rotor hub 130 to the rotor 140 on the upper side thereof, it will be understood that cooling air can flow through the air hole 140A formed in the vicinity of the corresponding region, which is not shown in FIG. 7.

That is, the electric machine 100 according to the present invention can also effectively dissipate heat generated from the coils 151 of the stator 150 by branching cooling air introduced into the housing into a stream flowing axially inside the housing 110 and a stream flowing in the radial direction of the rotor.

According to the present invention, since cooling air introduced into the housing 110 can flow smoothly without any structural interruption to cool the interior of the generator 100 and can also smoothly flow into the space between the rotor 140 and the stator 150 to ensure effective cooling of the coils 151 wound around the stator 150, it is possible to improve cooling performance of the generator 100, thereby ensuring significant improvement in power generation efficiency.

Furthermore, according to the present invention, since the plurality of permanent magnets 142 mounted on the rotor 140 is pressed and supported by the fixing pin 143 disposed therebetween, it is possible to effectively prevent detachment of the permanent magnets 142 from the rotor 140.

Although some embodiments have been described herein, it will be apparent to those skilled in the art that these embodiments are given by way of illustration only and the present invention is not limited thereto, and that various modifications, variations, and alterations can be made without departing from the spirit and scope of the present invention. Therefore, the accompanying claims and equivalents thereof are intended to cover such modifications and the like as would fall within the scope and spirit of the invention.

## Claims

1. An electric machine having an improved cooling structure, comprising:
a housing comprising a front cover, a body, and a rear cover coupled to each other to form an accommodation space;
a rotating shaft rotatably mounted at an axial center of the housing;
a rotor hub coupled to the rotating shaft;
a rotor coupled to the rotor hub to rotate together with the rotating shaft and including a plurality of permanent magnets arranged in a circumferential direction on a disc-shaped surface; and
a stator fixedly mounted inside the housing to be opposite the rotor in an axial direction of the housing and including a plurality of coils arranged in the circumferential direction,
wherein the rotor includes an air hole for allowing airflow between the front and rear sides along the axial direction.

2. The electric machine according to claim 1, wherein the rear cover and the front cover are formed with an air inlet for introduction of cooling air into the housing and an air outlet for discharge of the cooling air from the housing.

3. The electric machine according to claim 2, wherein
the cooling air introduced into the housing flows into a space between the rotor and the stator through the air hole,
the cooling air flowing into the space between the rotor and the stator is branched into a stream flowing in the axial direction of the housing and a stream flowing in a radial direction of the rotor, and
a plurality of air outlets are formed along the circumferential direction on an outer surface of the body to discharge the cooling air flowing along the radial direction of the rotor.

4. The electric machine according to claim 3, wherein
the rotor hub includes:
a cylindrical hub body in the form of a cylinder that is penetrated in an axial direction to allow the rotating shaft to be inserted and coupled; and
a rotor fastening unit protrudingly formed around an outer circumference of the hub body, where the rotor is in contact and fastened, and
the rotor fastening unit has a spline shape to avoid interference with the air hole.

5. The electric machine according to claim 4, wherein the spline shape is a shape in which the rotor fastening unit has protrusions having a sinusoidal shape repeating at equidistant intervals along the circumferential direction.

6. The electric machine according to claim 5, wherein the air hole is positioned at a valley formed by a spline curve of the rotor fastening unit.

7. The electric machine according to claim 6, wherein
the rotor further includes a fastening hole for coupling to the rotor fastening unit, and
the air hole and the fastening hole are alternately formed along the circumferential direction of the rotor.

8. The electric machine according to claim 1, wherein
the rotor includes:
a disc-shaped carrier in which a through-hole is formed at a center to allow the rotating shaft to pass through and including a mounting space along the circumferential direction formed to mount the plurality of permanent magnets;
the plurality of permanent magnets being arranged along the circumferential direction at regular intervals on a surface of the carrier facing the stator; and
a fixing pin disposed between each pair of adjacent permanent magnets to fix the permanent magnets to the carrier,
wherein a draft angle is applied to contact surfaces where the permanent magnet and the fixing pin are in contact to form the contact surfaces between the permanent magnet and the fixing pin as inclined surfaces, and the side surface of the permanent magnet is pressingly supported by the inclined contact surface of the fixing pin to prevent detachment.

9. The electric machine according to claim 8, wherein each pair of permanent magnets disposed opposite each other across the stator has opposite polarities.

10. The electric machine according to claim 8, wherein the fixing pin is formed with a fastening hole penetrating in a thickness direction and is fixed to the carrier by fastening a bolt or a screw through the fastening hole.

11. The electric machine according to claim 8, wherein the mounting space is provided in a form of a groove formed with a step difference from the surface of the carrier, corresponding to a space where the permanent magnet and the fixing pin are arranged.

12. The electric machine according to claim 11, wherein the fixing pin is disposed in the mounting space to have a predetermined clearance at both ends along a longitudinal direction.

13. The electric machine according to claim 12, wherein a length of the fixing pin along a direction outward from the center of the rotor is shorter than a length of the permanent magnet.
